# EUROPÄISCHE PATENTSCHRIFT

(11) **EP 0 600 155 B1**
(45) Veröffentlichungstag und Bekanntmachung des Hinweises auf die Patenterteilung: **15.10.1997**
(21) Anmeldenummer: 93111344.3
(22) Anmeldetag: 15.07.1993
(51) Int. Cl.: C04B 28/16

(54) **Anhydrittrockenmörtel und Verwendung desselben als selbstnievellierende Fliessestrichmischung**
Ready-mix anhydrite mortar and the use thereof as self-levelling flowing plaster composition
Mortier prêt d'anhydrite et son utilisation comme composition de plâtre fluide auto-nivellante

(30) Priorität: 08.08.1992 DE 4226277
(43) Veröffentlichungstag der Anmeldung: 08.06.1994
(73) Patentinhaber: Heidelberger Zement AG, D-69120 Heidelberg (DE)
(72) Erfinder: Kopp, Ulrich, D-69190 Walldorf (DE)
(74) Vertreter: Schmid, Rudolf, Dipl.-Ing., Patentanwalt

(56) Entgegenhaltungen:
- DD-A- 130 781
- DE-A- 2 351 084
- DE-A- 3 127 436
- DE-A- 3 937 431
- DE-B- 1 077 130
- DE-C- 1 018 775
- FR-A- 2 659 078
- GB-A- 1 099 109
- CHEMICAL ABSTRACTS, Band 115, Nr. 4, 29. Juli 1991, Columbus, OH (US); Seite 315, Nr. 34416y
- CHEMICAL ABSTRACTS, Band 96, Nr. 20, 17. Mai 1982, Columbus, OH (US); Seite 322, Nr. 167590m

## Beschreibung

Der Gegenstand der vorliegenden Erfindung betrifft einen Anhydrittrockenmörtel, welcher die Verwendung von natürlichem und synthetischem Anhydrit, als auch von Flugstaub aus der Zementklinkerherstellung gestattet, sowie Verwendung desselben als Fließestrichmischung.

Aus der DE-PS 10 77 130 ist ein Verfahren zur Herstellung einer Estrichmasse auf Anhydritbasis bekannt, bei der phosphorsäure- und schwefelsäurehaltiges Calciumsulfatdihydrat, wie es bei der Phosphorsäureherstellung nach dem Naßverfahren anfällt, bei Temperaturen von 1000 bis 1100°C gebrannt, der so entstandene Anhydrit auf eine Korngröße von 95 % aller Körner weniger als 0,09 mm vermahlen und mit Sand einer Korngröße unter 3 mm als Magerungsmittel urd Wasser, das einen Anreger enthält, vermischt wird. Diese Estrichmasse ist weder pumpfähig noch selbstnivellierend. Für die Glättung der Oberfläche ist ein hoher manueller Aufwand erforderlich.

Es ist weiterhin aus DE-OS 23 51 084 bekannt, die Weiterentwicklung eines Verfahrens zur Herstellung eines Körpers aus Anhydrit, abbindebeeinflussender Substanz, Anmachwasser und gegebenenfalls Zusatzmittel, jedoch ohne Magerungsmittel, bei dem der Anhydrit, der Anreger und gegebenenfalls das Zusatzmittel mit Wasser in einem bestimmten Verhältnis gemischt und mittels einer Schneckenpumpe gefördert werden. Die Weiterentwicklung besteht darin, daß anstelle von synthetischem Anhydrit auch Naturanhydrit verwendet werden kann.
Dieser Anhydritmörtel ist zwar pumpfähig, aber nicht selbstnivellierend, so daß ein nachfolgendes Glätten erforderlich ist. Außerdem ist die Austrocknungszeit zu lang.

Um eine Fließfähigkeit und selbstnivellierende Eigenschaft zu erreichen, müssen den natürlichen oder synthetischen Anhydritbindern größere Mengen an Anmachwasser zugesetzt werden, was einen erheblichen Abfall der mechanischen Eigenschaften zur Folge hat. Deshalb wurde bereits vorgeschlagen, synthetische Anhydritbinder, Verflüssigungsmittel und festigkeitserhöhende Zusätze, ohne Sand, zu einer fließ- und pumpfähigen Masse zu verarbeiten. Ein weiterer Vorschlag ist darauf gerichtet, synthetische Anhydritbinder mit sedimentationsverzögernden und die Fließfähigkeit und die Festigkeit erhöhende Substanzen zu einer fließfähigen Masse zu verarbeiten. Beide Vorschlöge haben jedoch den Nachteil, daß nur synthetischer Anhydrit verwendet werden kann.

In der DD-PS 130 781 wurde deswegen die Verwendung von natürlichem Anhydrit zur Herstellung von Fließanhydritbinder unter Zugabe einer Kombination von Anregerstoffen in zwei Stufen in Verbindung mit einem Verflüssiger vorgeschlagen. Nachteilig ist hierbei, das notwendige Zumischen der dritten Anregerkomponenten auf der Baustelle.
Durch die DE-OS 31 27 436 ist eine selbstnivellierende Fußbodenestrichmischung vorgeschlagen worden, deren hohe Qualität erreicht wird, in dem selektiv gewonnener und vorbehandelter natürlicher Anhydrit einer bestimmten chemischen Zusammensetzung mit einer Kombination von Anregersalzen in einem Mahl-Misch-Vorgang auf eine bestimmte Sieblinie gebracht und mit Betonsand einer Körnung von 0 - 2 mm verwendet wird.

Die DE-OS 39 37 431 schlägt eine Verschleißschicht für Nutzböden vor, die wasserbeständig, früh belastbar und abriebfest ist und aus einem Bindemittel enthaltend Zement, Gips, Kunststoffdispersion und übliche Zusätze sowie Zuschläge enthaltend Quarzsand und Kalksteinmehl besteht.

Die Druckschrift Chemical Abstracts Nr. 34416y offenbart eine Mischung welche als wesentliche Komponente, neben Anhydrit, einen Zementklinkerstaub enhält.

Die Aufgabe vorliegender Erfindung besteht in der Bereitstellung eines preiswerten und umweltgerechten Anhydrittrockenmörtels insbesondere zur Verwendung als Fließestrichmischung, der zumindest die Normanforderungen erfüllt.

Die Lösung dieser Aufgabe besteht erfindungsgemäß in den Merkmalen der Anspruche 1 und 2. Weitere Ausgestaltungen der Erfindung sind in den Unteransprüchen gekennzeichnet.

Die erfindungsgemäßen Anhydrittrockenmörtel, mit Wasser angerührt, binden rasch und schwindfrei ab, sind rasch belastbar und zeigen auch bei extremen Belastungen warm/kalt keine unerwünschten Alterungserscheinungen.
Ein besonderer Vorteil des erfindungsgemäßen Anhydritmörtels besteht darin, daß er sowohl aus natürlichem als auch aus synthetischem Anhydrit hergestellt werden kann unter Verwendung von Flugstaub, Nebenprodukt der Zementklinkerherstellung, und daß man durch Anpassung der übrigen Komponenten, insbesondere des Verflüssigungsmittels, des Stabilisators, einen preiswerten, als Fließestrichmischung für den Innenbereich gut verwendbares Produkt erhält.

Bezüglich der Definition des natürlichen Anhydrits, wird beispielsweise auf Ullmann Enzyklopädie der technischen Chemie, 8. Band, Urban & Schwarzenberg, München, Berlin, 1957 verwiesen.

Der synthetische Anhydrit wird vorzugsweise aus Rauchgasgips (CaSO₄ 2H₂O) hergestellt, wie es insbesondere in Trockenfeuerungen und Wirbelschichtfeuerungen von Braunkohle und Steinkohle entsteht.
Der Rauchgasgips wird bei Temperaturen von 1000 bis 1100°C gebrannt und der so entstandene Anhydrit auf bestimmte Korngröße gebracht.
Der synthetische Anhydrit kann auch aus der Flußsäureherstellung stammen.

Erfindungswesentlich ist, daß es sich um einen u. a. K₂SO₄ enthaltenden Staub handelt. Der Staub wird aus der Elektrogasreinigung (EGR-Staub) des Lepolbrennverfahrens gewonnen oder fällt als Bypass-Staub anderer Zementklinkerbrennverfahren an.
Dieser EGR-Staub oder Bypass-Staub, Abfallprodukt der Zementklinkerherstellung, besteht im wesentlichen aus einer Mischung folgender Komponenten: K₂SO₄, Na₂SO₄, CaCo₃ und KCl.

Der Gehalt an Alkalisulfaten beträgt etwa 30 bis 50 Massen-%.

Es hat sich überraschenderweise herausgestellt, daß bei Verwendung von EGR-Staub in dem Anhydritmörtel, insbesondere in Kombination mit Hochofenzement, herkömmliche, teure Anreger, wie z. B. K₂SO₄, Na₂SO₄, mit Erfolg ersetzt werden können.
Als Zuschläge für die Anhydritmischung kommt beispielsweise Brechsand auf Basis von
- Quarz
- Kalk
- Anhydrit
oder gewaschener Quarzsand der Korngröße 0 bis 3 mm infrage.

Als Zusatzmittel und -stoffe kommen beispielsweise Verflüssiger,wie Melamin-Formaldehydharze oder Ligninsulfate, Stabilisatoren, wie Methyl-Cellulose infrage.

Das Anmachwasser muß so dosiert werden, daß Estrichmörtel selbstnivellierende Eigenschaften hat, nämlich ein Fließmaß von 50 cm mit der 1 l Meßdose. Damit erreicht man Festigkeitswerte, die mindestens einem AE 20 entsprechen.

### Ausführungsbeispiel:

- 45 Massen-%: synthetisches Anhydrit
- 45 Massen-%: Quarzsand 0 - 2 mm
- 7 Massen-%: Hochofenzement (HOZ)
- 2 Massen-%: EGR-Staub
- 1 Massen-%: Verflüssiger, Stabilisatoren, Entschäumer.

Dieses Gemisch wird mit Wasser zu einem pumpfähigen, selbstnivellierenden Gemisch angerührt, welches rasch und schrumpffrei abbindet und rasch belastbar ist.

Die selbstnivellierenden Fließestrichmischungen sind für den Innenbereich geeignet (keine Einwirkung von Feuchtigkeit). Es können daraus Verbundestriche, Estriche auf Trennschichten oder schwimmende Estriche hergestellt werden. Besonders geeignet sind die Estrichemischungen für Heizestriche und zwar wegen der guten Ummantelung der Heizrohre und der geringen Wärmeausdehnungskoeffizienten.

## Patentansprüche

1. Anhydrittrockenmörtel, vorzugsweise für Fließestrichmischungen, aus natürlichem oder synthetischem Anhydrit oder Mischungen derselben, Anreger, Verflüssiger und/oder Stabilisatoren und/oder Entschäumer sowie Brechsand,
dadurch gekennzeichnet,
daß dieser als Anreger einen Alkalisulfat-haltigen Flugstaub aus der Zementklinkerherstellung, in Form von Staub der Elektrogasreinigung des Lepolbrennverfahrensoder Bypass-Staub anderer Zementklinkerbrennverfahren in einer Menge bezogen auf den Gesamtfeststoffgehalt des Anhydrittrockenmörtels von 2-3 Masse %, enthält.

2. Anhydrittrockenmörtel nach Anspruch 1,
dadurch gekennzeichnet,
daß der Flugstaub einen Gehalt von 30 - 50 Massen-% an Alkalisulfat aufweist.

3. Anhydrittrockenmörtel nach Anspruch 1 und 2,
dadurch gekennzeichnet,
daß dieser Hochofenzement enthält.

4. Anhydrittrockenmörtel nach Anspruch 1 und 2,
gekennzeichnet durch einen Gehalt von
a) 40 - 50 Massen-% an natürlichem und/oder synthetischen Anhydrit,
b) 40 - 50 Massen-% an Brechsand,
c) 2 - 3 Massen-% an Anreger in Form von Alkalisulfathaltigem Flugstaub aus der Zementklinkerherstellung,
d) 1 Massen-% an Verflüssiger und/oder Stabilisatoren und/oder Entschäumer.

5. Anhydrittrockenmörtel nach Anspruch 1 bis 3, gekennzeichnet durch einen Gehalt von
a) 40 - 50 Massen-% an natürlichem und/oder synthetischem Anhydrit,
b) 40- 50 Massen-% an Brechsand,
c) 7 Massen-% an Hochofenzement,
d) 2 - 3 Massen-% an Anreger in Form von Alkalisulfathaltigem Flugstaub aus der Zementklinkerherstellung,
e) 1 Massen-% an Verflüssiger und/oder Stabilisatoren und/oder Entschäumer.

6. Anhydrittrockenmörtel nach Anspruch 1,
dadurch gekennzeichnet,
daß der Brechsand eine Teilchengröße von 0 - 3 mm aufweist.

7. Anhydrittrockenmörtel nach Anspruch 1,
dadurch gekennzeichnet,
daß der Verflüssiger in Form von Melamin-Formaldehydharzen, Ligninsulfonaten vorliegt.

8. Anhydrittrockenmörtel nach Anspruch 1,
dadurch gekennzeichnet,
daß der Stabilisator Methylcellulose ist.

9. Anhydrittrockenmörtel nach Anspruch 1,
dadurch gekennzeichnet,
daß dieser nach Vermengung mit Wasser in Form einer pumpfähigen, niederviskosen selbstnivellierenden Masse vorliegt.

10. Verwendung des Anhydrittrockenmörtels nach Anspruch 9 als Fließestrichtrockenmischung.

## Claims

1. Anhydrite premix plaster, preferably for use in screed ready-mix products, composed of natural and synthetic anhydrite, or mixtures thereof, activators, plasticising agents and/or stabilisers and/or defoamers, as well as crushed stone sand,
**wherein**
the activator of the anhydrite premix plaster includes flue dust, containing alkali sulfate, from the cement clinker production process, in the form of dust as that generated in electric gas cleaning under the Lepol burning procedure or of bypass dust as that generated in other types of cement-clinker burning procedures, in a quantity of 2-3% by mass relative to the total solids content of the anhydrite premix plaster.

2. Anhydrite premix plaster in accordance with claim 1,
**wherein**
the alkali sulfate is contained in a quantity of 30-50% by mass in the flue dust.

3. Anhydrite premix plaster in accordance with claims 1 and 2,
**wherein**
blastfurnace slag cement is contained in it.

4. Anhydrite premix plaster in accordance with claims 1 and 2,
**wherein**
the following substances are contained therein in the following quantities:
a) 40-50% by mass of natural and/or synthetic anhydrite
b) 40-50% by mass of crushed stone sand
c) 2- 3% by mass of an activator in the form of flue dust from the cement-clinker production process
d) 1% by mass of plasticising agents and/or stabilisers and/or defoamers.

5. Anhydrite premix plaster in accordance with claims 1 to 3,
**wherein**
the following substances are contained therein in the following quantities:
a) 40-50% by mass of natural and/or synthetic anhydrite
b) 40-50% by mass of crushed stone sand
c) 7% by mass of blastfurnace slag cement
d) 2- 3% by mass of an activator in the form of flue dust from the cement-clinker production process
d) 1% by mass of plasticising agents and/or stabilisers and/or defoamers.

6. Anhydrite premix plaster in accordance with claim 1,
**wherein**
the crushed stone sand has a grain size of 0 - 3 mm.

7. Anhydrite premix plaster in accordance with claim 1,
**wherein**
the plasticising agent is contained therein in the form of melamine formaldehyde resins.

8. Anhydrite premix plaster in accordance with claim 1,
**wherein**
the stabiliser contained therein is methyl cellulose.

9. Anhydrite premix plaster in accordance with claim 1,
**wherein**
it assumes - when mixed with water - the appearance of a pumpable, low-viscosity, self-levelling mass.

10. Use of the anhydrite premix plaster described in claim 9 hereinbefore as a screed ready-mix product.

## Revendications

1. Mortier sec d'anhydrite, de préférence pour ciment fluide à chape, constitué d'anhydrides naturelle ou synthétique ou de mélanges de celle-ci, d'activateurs, de fluidifiants et/ou de stabilisateurs et/ou d'agents anti-moussants ainsi que de sable de concassage,
caractérisé en ce
qu'il contient comme activateurs des cendres volantes provenant de la fabrication du clinker et contenant du sulfate alcalin sous forme de poussières émanant du nettoyage électrogazeux du procédé de cuisson Lepol ou bien de poussières by-pass issues d'autres procédés de fabrication de clinker de ciment dans une proportion de 2 à 3 % en masse par rapport a la teneur totale en matières solides du mortier sec d'anhydrite.

2. Mortier sec d'anhydrite d'après la revendication 1,
caractérisé en ce que
les cendres volantes présentent une teneur en sulfate alcalin de 30 à 50 % en masse

3. Mortier sec d'anhydrite d'après les revendications 1 et 2,
caractérisé en ce que
celui-ci contient du ciment de laitier de haut-fourneau.

4. Mortier sec d'anhydrite d'après les revendications 1 et 2,
caractérisé par une teneur
a) en anhydrite naturelle et/ou synthétique de 40 à 50 % en masse,
b) en sable de concassage de 40 à 50 % en masse,
c) en activateur sous forme de cendres volantes contenant un sulfate alcalin issu de la production de clinker de ciment de 2 à 3 % en masse,
d) en fluidifiants et/ou stabilisateurs et/ou agents anti-moussants de 1 % en masse.

5. Mortier sec d'anhydrite d'après les revendications 1 à 3,
caractérisé par une teneur
a) en anhydrite naturelle et/ou synthétique de 40 à 50 % en masse,
b) en sable de concassage de 40 à 50 % en masse,
c) en ciment de haut fourneau de 7 % en masse
d) en activateur sous forme de cendres volantes contenant un sulfate alcalin issu de la production de clinker de ciment de 2 à 3 % en masse,
d) en fluidifiants et/ou satbilisateurs et/ou agents anti-moussants de 1 % en masse.

6. Mortier sec d'anhydrite d'après la revendication 1,
caractérisé en ce que
le sable de concassage présente une granulométrie de 0 à 3 mm.

7. Mortier sec d'anhydrite d'après la revendication 1,
caractérisé en ce que
le fluidifiant se présente sous forme de résines de mélamine-formaldéhyde, de lignosulfates.

8. Mortier sec d'anhydrite d'après la revendication 1,
caractérisé en ce que
le stabilisateur est de la méthylcellulose.

9. Mortier sec d'anhydrite d'après la revendication 1,
caractérisé en ce que
celui-ci, après gâchage à l'eau, se présente sous forme de masse pompable, à faible viscosité et pouvoir auto-nivellant.

10. Utilisation du mortier sec d'anhydrite d'après la revendication 9,
sous forme de mélange sec pour ciment fluide à chape.
